# EUROPÄISCHE PATENTSCHRIFT

(11) **EP 4 263 399 B1**
(45) Veröffentlichungstag und Bekanntmachung des Hinweises auf die Patenterteilung: **30.07.2025**
(21) Anmeldenummer: 21811232.4
(22) Anmeldetag: 12.11.2021
(51) Int. Cl.: B65G 61/00, B65G 1/04, B65G 47/90

(54) **VORRICHTUNG ZUM VERLAGERN VON TRANSPORTBEHÄLTERN ZWISCHEN EINEM BEHÄLTERSTAPEL UND EINEM BEHÄLTERREGAL**
APPARATUS FOR MOVING TRANSPORT CONTAINERS BETWEEN A CONTAINER STACK AND A CONTAINER RACK
APPAREIL POUR DÉPLACER DES CONTENEURS DE TRANSPORT ENTRE UNE PILE DE CONTENEURS ET BÂTI DE CONTENEUR

(30) Priorität: 17.12.2020 AT 511112020
(43) Veröffentlichungstag der Anmeldung: 25.10.2023
(73) Patentinhaber: Entenfellner, Peter, 4600 Thalheim bei Wels (AT); Holzleithner, Andreas, 4652 Fischlham (AT)
(72) Erfinder: Entenfellner, Peter, 4600 Thalheim bei Wels (AT); Holzleithner, Andreas, 4652 Fischlham (AT)
(74) Vertreter: Hübscher & Partner Patentanwälte GmbH
(86) Internationale Anmeldenummer: PCT/AT2021/060430
(87) Internationale Veröffentlichungsnummer: WO 2022/126156

(56) Entgegenhaltungen:
- EP-A1- 2 620 391
- EP-A1- 3 647 231
- WO-A1-2019/152861

## Beschreibung

### Technisches Gebiet

Die Erfindung bezieht sich auf eine Vorrichtung zum Verlagern von Transportbehältern zwischen einem Behälterstapel und einem Behälterregal, mit einer quer zu einer Heberichtung an einen Transportbehälter anstellbaren Hebeeinrichtung.

### Stand der Technik

Im Bereich der Transportlogistik kommen insbesondere als sogenannte Manipulatoren ausgebildete Vorrichtungen zum Einsatz. Diese ermöglichen ein Ablegen und Aufnehmen von einzelnen Transportbehältern. Derartige Vorrichtungen umfassen üblicherweise Hebeeinrichtungen, die sich beim Aufnehmen eines Transportbehälters diesem in einer Heberichtung von der Oberseite annähern, wobei die beispielsweise als Greifersystem ausgebildete Hebeeinrichtung quer zu der Heberichtung an den Transportbehälter angestellt wird. Unter einem Anstellen quer zur Heberichtung wird verstanden, dass die Wirkflächen der Hebeeinrichtung nicht behälterbodenseitig, sondern insbesondere an den Seitenwänden eines Transportbehälters angestellt werden, sodass der Transportbehälter kraftschlüssig von der Hebeeinrichtung in Heberichtung angehoben werden kann. Nachteilig an solchen Vorrichtungen ist allerdings, dass ein Verlagern von Transportbehältern von einem Behälterstapel zu einem in der Regel lediglich von einer Einführseite her zugänglichem Behälterregal nur in begrenztem Ausmaß möglich ist, weil insbesondere bei zumindest teilbefüllten Behälterregalen das Greifersystem bzw. dessen Schwenkarm nicht mehr ausreichend Platz vorfindet, um den Transportbehälter in das entsprechende Fach des Behälterregals einzuschlichten. Umgekehrt ist das Verlagern eines Transportbehälters von einem vollen Behälterregal zu einem Behälterstapel aufgrund der gegebenen konstruktiven Einschränkungen grundsätzlich nicht möglich.

Die EP 3 647 231 A1 offenbart eine Vorrichtung zum Verlagern von Transportbehältern, welche die Merkmale des Oberbegriffs des Anspruchs 1 aufweist.

### Darstellung der Erfindung

Es besteht somit ein Bedarf an einer Vorrichtung der eingangs geschilderten Art, die trotz kompakter Bauweise ein zuverlässiges Verlagern von Transportbehältern zwischen einem Behälterstapel und einem Behälterregal unabhängig von dessen Befüllungsgrad ermöglicht und die sich vorzugsweise zur Ausrüstung von Manipulatoren bei Industrierobotern eignet.

Erfindungsgemäß wird eine Vorrichtung zum Verlagern von Transportbehältern nach Anspruchs 1 vorgeschlagen. Bevorzugte Ausführungen der Vorrichtung werden in den abhängigen Ansprüchen 2-8 definiert.

Die Erfindung löst die gestellte Aufgabe dadurch, dass die Hebeeinrichtung eine Führung zur Verlagerung des Transportbehälters quer zur Heberichtung aufweist und dass eine lösbar zug- und schubfest mit dem Transportbehälter verbindbare Schiebeeinrichtung zur Verlagerung des Transportbehälters in der Führung zwischen einer Hebelage und einer Regaleinführlage vorgesehen ist.

Zufolge der erfindungsgemäßen Merkmale wird unabhängig vom Befüllungsgrad eines Behälterregals ermöglicht, einerseits aus der Heberichtung ansetzend den obersten Transportbehälter von einem Behälterstapel aufzunehmen, absturzsicher zu einem Behälterregal zu überführen und dort mithilfe der Schiebeeinrichtung quer zur Heberichtung einzuschieben, sowie andererseits Transportbehälter vom Behälterregal quer zur Heberichtung mit der Schiebeeinrichtung abzuziehen und wieder aus der Heberichtung kommend auf einen Behälterstapel bzw. auf Transportpaletten aufzuladen. Die Hebeeinrichtung ist dabei so an den Transportbehälter anstellbar, dass dieser in einer Hebelage sicher und vorzugsweise formschlüssig und kraftschlussfrei von der Hebeeinrichtung gehalten ist, sodass der Transportbehälter auch quer zur Heberichtung entlang der Führung verschiebbar bleibt. Die Schiebeeinrichtung ist derart lösbar zug- und schubfest mit dem Transportbehälter verbindbar, dass der Transportbehälter einerseits in der Hebelage auch bei den für kurze Manipulationszeiten erforderlichen großen Beschleunigungen eines Industrieroboters gesichert ist und andererseits zum Verlagern des Transportbehälters zwischen der Hebelage und der Regaleinführlage die durch die Schiebeeinrichtung eingeleitete Kraftbeaufschlagung wirksam aufnehmen kann. Es ist somit auch nicht mehr nötig, dass die Vorrichtung insbesondere dann, wenn diese auch einen mehrachsigen Industrieroboter umfasst, zur Verlagerung des Transportbehälters in das Behälterregal erst in den Behälterregalinnenbereich eindringen muss, damit dort der Transportbehälter aus der Hebelage freigegeben und in das Behälterregal eingeschlichtet werden kann. Erfindungsgemäß ist im Gegensatz dazu vorgesehen, dass die Vorrichtung mitsamt Transportbehälter in Hebelage an der Einführseite des Behälterregals in entsprechender Regalhöhe in einer Übergabestellung positioniert werden kann, wobei dann der Transportbehälter aus der Hebelage entlang der Führung in die Regaleinführlage verlagert und somit in das entsprechende Regalfach übergeben wird. Besonders günstige konstruktive Bedingungen ergeben sich beispielsweise, wenn die erfindungsgemäße Führung durch eine Gleitschiene gebildet ist, auf welcher der Transportbehälter aufliegt und über die Schiebeeinrichtung quer zur Heberichtung zwischen der Hebelage und der Regaleinführlage verlagert werden kann. Zusätzlich kann die erfindungsgemäße Vorrichtung bezüglich einer in Heberichtung verlaufenden Drehachse rotierbar sein, um Transportbehälter unabhängig von der räumlichen Lage der Behälterstapel und der Behälterregale zueinander verlagern zu können.

Um bei kompakter Bauweise unabhängig von den Dimensionen der Transportbehälter ein zuverlässiges Verlagern zwischen einem Behälterstapel und einem Behälterregal zu ermöglichen, wird vorgeschlagen, dass die Vorrichtung eine Behälteraufnahme umfasst, in die der Transportbehälter bei offener Hebeeinrichtung in Heberichtung und bei angestellter Hebeeinrichtung quer zur Heberichtung einführbar ist. Gerade bei eng aneinandergereihten Behälterstapeln wird üblicherweise ein schmaler Spaltraum zwischen benachbarten Behälterstapeln freigelassen, um gegebenenfalls auch eine manuelle Aufnahme eines Transportbehälters zu ermöglichen, indem mit den Händen in die Spalträume zu jeder Seite des Transportbehälters gefasst werden kann. Um vor diesem Hintergrund eine problemlose Aufnahme eines Transportbehälters durch die Hebeeinrichtung zu ermöglichen, empfiehlt es sich, dass die Hebeeinrichtung bezogen auf deren Breite lediglich einen solchen Überstand gegenüber dem Transportbehälter aufweist, dass ein Ansetzen der Hebeeinrichtung aus der Heberichtung heraus in die Spalträume erfolgen kann.

Eine konstruktiv vorteilhafte Lösung, den Transportbehälter von der Hebeeinrichtung sicher und dennoch quer zur Heberichtung verschiebbar aufzunehmen, ergibt sich, wenn die an den Transportbehälter angestellte Hebeeinrichtung eine quer zur Heberichtung verlaufende Feder-Nut-Verbindung mit dem Transportbehälter ausbildet. Um die Gefahr von Beschädigungen der Feder durch unsachgemäße Handhabung des Transportbehälters zu verringern, bildet der Transportbehälter vorzugsweise an zwei gegenüberliegenden Seitenwänden jeweils quer zur Heberichtung verlaufende Führungsnuten aus, in die entsprechenden Führungsstege der Hebeeinrichtung als Federn eingreifen, sodass sich einerseits in Heberichtung ein Formschluss bildet und andererseits quer zur Heberichtung die Verschiebbarkeit des Transportbehälters relativ zur Hebeeinrichtung durch ein Gleiten der Führungsstege gegenüber den Führungsnuten ermöglicht wird. Grundsätzlich können die Führungsnuten allerdings auch von der Hebeeinrichtung ausgebildet werden, während die Federn an dem Transportbehälter angeordnet sind.

Besonders günstige Hebebedingungen bei geringem Bauraumbedarf ergeben sich, wenn die Hebeeinrichtung zwei relativ zueinander verlagerbare Hebearme aufweist. Beispielsweise können die Hebearme über quer zur Heberichtung verfahrbare, pneumatisch oder hydraulisch beaufschlagbare Teleskoparme bzw. einen Spindeltrieb relativ zueinander verlagert werden. Vorzugsweise bildet jeder Hebearm mit dem aufgenommenen Transportbehälter eine entsprechende Feder-Nut-Verbindung aus. Die Breite der einzelnen Hebearme kann dabei das geringste Spaltmaß zwischen zwei Transportbehältern in nebeneinanderliegenden Behälterstapeln unterschreiten.

Um ein problemloses Verbinden und Lösen der Schiebeeinrichtung am Transportbehälter bei gleichzeitig besonders robuster Bauweise zu ermöglichen, wird vorgeschlagen, dass die Schiebeeinrichtung wenigstens einen Schieber aufweist, der einen zwischen einer Raststellung und einer Offenstellung verstellbaren Rastkörper zum Eingriff in eine Rastöffnung des Transportbehälters aufweist. Zur Verbindung der Schiebereinrichtung mit dem Transportbehälter wird der vorzugsweise zwei Wirkelemente umfassende Rastkörper in einer Einführrichtung in die Rastöffnung des Transportbehälters eingeführt, wonach die beiden Wirkelemente quer zur Einführrichtung gegeneinander verlagert werden und die Rastöffnung formschlüssig hintergreifen und / oder den Rastkörper kraftschlüssig in der Rastöffnung verspreizen. Umgekehrt werden zum Lösen der Schiebereinrichtung vom Transportbehälter die Wirkelemente des Rastkörpers wieder zueinander rückverlagert. Für besonders günstige konstruktive Bedingungen kann der Rastkörper zwei zu- bzw. gegeneinander verlagerbare Rastkörperhälften als Wirkelemente aufweisen. Dadurch, dass der Rastkörper nicht am Transportbehälter angeordnet ist, ergibt sich darüber hinaus der Vorteil, dass die Gefahr von Beschädigungen des abstehenden Rastkörpers aufgrund unsachgemäßer Handhabung des Transportbehälters reduziert wird.

In einer vorteilhaften Ausführung der erfindungsgemäßen Vorrichtung kann der Schieber der Schiebeeinrichtung zwischen einer Übergabestellung zur Verbindung mit einem in einem Behälterregal angeordneten Transportbehälter und einer Hebestellung zur Aufnahme des Transportbehälters in der Hebeeinrichtung verlagerbar sein. Für eine besonders gute Platzersparnis ist der Schieber vorzugsweise von einem Randbereich der Vorrichtung zu einem quer zur Heberichtung gegenüberliegenden Randbereich verlagerbar. Zufolge dieser Merkmale wird die Vorrichtung bzw. die Lagerung der Vorrichtung an einem etwaigen Schwenkarm beim Verlagern eines Transportbehälters zwischen dem Behälterregal und der Hebeeinrichtung lediglich mit geringen Kippmomenten beaufschlagt, weil im Zuge der Verlagerung zwischen Übergabestellung und Hebestellung die Gewichtskraft des Transportbehälters sowohl von der Hebeeinrichtung als auch vom Behälterregal aufgenommen werden kann.

Um die erfindungsgemäße Vorrichtung für Transportbehälter unterschiedlicher Breite einsetzen zu können und in Bezug auf sowohl die Hebe- als auch die Schiebeeinrichtung vorteilhafte konstruktive Bedingungen zu schaffen, empfiehlt es sich, dass die Schiebeeinrichtung zwei jeweils an einem Hebearm quer zur Heberichtung verschiebbar gelagerte Schieber umfasst. Vorzugsweise bildet jeder Hebearm gemeinsam mit einem Schieber und einem diesem zugeordneten Stelltrieb eine konstruktive Einheit. Als Stelltrieb kann beispielsweise ein durch ein Doppelritzelpaar gebildeter Doppelkettentrieb vorgesehen sein, wobei zur Antriebsverbindung ein Hebelarm sowohl an den jeweiligen Ketten als auch am entsprechenden Schieber selbst angelenkt ist. Dadurch, dass die jeweils einem Ritzel zugeordneten Ketten eine unterschiedliche Laufgeschwindigkeit aufweisen, kann bei entsprechender Auslegung und Dimensionierung des Doppelkettentriebes der quer zur Heberichtung verlaufende Stellweg des Schiebers eingestellt werden. Alternativ kann der Stelltrieb eine Kulissenführung bilden, wobei ein entlang der Kulissenführung verlagerbarer Hebelarm mit dem Schieber antriebsverbunden ist. Für eine besonders kompakte Bauweise kann grundsätzlich vorgesehen sein, dass im Falle einer Feder-Nut-Verbindung zwischen Transportbehälter und Hebeeinrichtung die jeweils als Feder wirkenden Führungsstege der Hebearme gleichzeitig die Führung für die Schieber zu deren Verlagerung quer zur Heberichtung bilden.

Zur lösbaren Befestigung zwischen aufeinandergestapelten Transportbehältern können diese Rasteinrichtungen umfassen, die entlang einer Eingriffsrichtung verlagerbare Rasthaken zum Eingriff in Rastausnehmungen eines am Behälterstapel benachbarten Transportbehälters aufweisen. Die diesbezüglichen Rastausnehmungen können beispielsweise an zwei gegenüberliegenden Seitenwänden eines Transportbehälters gebildet oder auch durch an der Behälterdecke angeordnete Führungskörper bereitgestellt werden. Nach dem Betätigen der Rasteinrichtung greifen die Rasthaken in die Rastausnehmungen formschlüssig ein und legen die Transportbehälter zueinander somit auch entgegen der Eingriffsrichtung und aufgrund des Formschlusses auch in einer Querrichtung fest, sodass die beiden benachbarten Transportbehälter in sämtlichen Raumrichtungen zueinander ausgerichtet und aneinander befestigt sind.

Um vor diesem Hintergrund auch ein problemloses Verlagern derartiger Transportbehälter zwischen einem Behälterstapel und einem Behälterregal zu ermöglichen, wird vorgeschlagen, dass eine Betätigungseinrichtung für eine Rastverbindung vorgesehen ist. Aufgrund der Betätigungseinrichtung kann eine durch eine zuvor beschriebene Rasteinrichtung gebildete Rastverbindung zur Verankerung eines Transportbehälters gelöst werden, sodass der aufzuhebende Transportbehälter zur Verlagerung freigegeben wird. Im Falle von zwei Hebearmen kann jedem dieser Hebearme eine entsprechende Betätigungseinrichtung zugeordnet sein.

In diesem Zusammenhang ergeben sich konstruktiv besonders günstige Bedingungen, wenn die Betätigungseinrichtung einen Betätigungsschieber umfasst, der am in Betätigungsrichtung geführten freien Ende eines Kettentriebes angeordnet ist. Vorzugsweise ist der entsprechende Kettentrieb in einem Hebearm untergebracht, sodass eine besonders kompakte Bauweise ermöglicht wird. Je nach Ausgestaltung der zu lösenden Rastverbindung kann der Betätigungsschieber beispielsweise an seinem freien Ende eine Anlauffläche bilden, sodass die Kraftbeaufschlagung der beispielsweise einen federbelasteten Rastbügel aufweisenden Rasteinrichtung durch den Betätigungsschieber problemlos erfolgen kann.

### Kurze Beschreibung der Erfindung

In der Zeichnung ist der Erfindungsgegenstand beispielsweise dargestellt. Es zeigen
- Fig. 1: eine schematische Vorderansicht von drei nebeneinanderliegenden Behälterstapeln mit einer in Heberichtung ansetzenden erfindungsgemäßen Vorrichtung bei offener Hebeeinrichtung,
- Fig. 2: einen Schnitt entlang der Linie II-II,
- Fig. 3: einen Schnitt entlang der Linie III-III,
- Fig. 4: eine der Fig.3 entsprechende Darstellung bei angestellter Hebeeinrichtung,
- Fig. 5: eine teilaufgerissene Seitenansicht einer erfindungsgemäßen Vorrichtung mit einer in Hebestellung befindlichen Schiebeinrichtung in einer ersten Ausführungsform,
- Fig. 6: eine der Fig. 5 entsprechende Detailansicht mit einer in Übergabestellung befindlichen Schiebeeinrichtung,
- Fig. 7: ein schematischer Schrägriss eines erfindungsgemäßen Schiebers mit einem Rastkörper in Raststellung,
- Fig. 8: eine der Fig. entsprechende Darstellung mit einem Rastkörper in Offenstellung und
- Fig. 9: eine schematische Seitenansicht einer erfindungsgemäßen Schiebeeinrichtung in einer weiteren Ausführungsform.

### Wege zur Ausführung der Erfindung

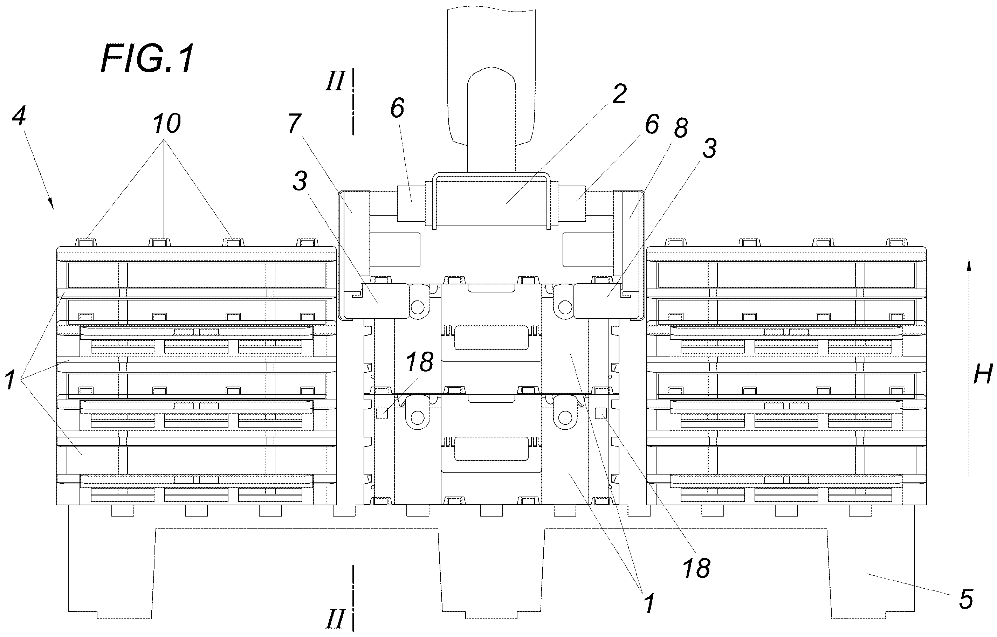

Eine erfindungsgemäße Vorrichtung umfasst eine quer zur Heberichtung H an einen Transportbehälter 1 anstellbare Hebeeinrichtung 2, sowie eine lösbar zug- und schubfest mit dem Transportbehälter 1 verbindbare Schiebeeinrichtung 3. Die Transportbehälter 1 sind auf nebeneinanderliegenden Behälterstapeln 4 angeordnet, welche ihrerseits auf einer beispielhaften Palette 5 abgelegt sind, wie dies in Fig. 1 dargestellt ist. Die Hebeeinrichtung 2 weist in der gezeigten Ausführungsform zwei über beispielsweise hydraulisch beaufschlagbare Telskoparme 6 relativ zueinander verlagerbare Hebearme 7, 8 auf. Die Vorrichtung kann darüber hinaus auch einen Industrieroboter umfassen, wie dies durch den Schwenkarm, auf dem die Hebeeinrichtung 2 gelagert ist, angedeutet wird.

Zur Aufnahme eines Transportbehälters 1, nähert sich die Hebeeinrichtung 2 aus der Heberichtung H kommend dem obersten Transportbehälter 1 eines Behälterstapels 4 und wird über die Hebearme 7, 8 quer zur Heberichtung H an den Transportbehälter 1 angestellt. Um trotz den sich zwischen nebeneinanderliegenden Behälterstapeln 4 bildenden schmalen Spaltmaßen eine problemlose Aufnahme eines Transportbehälters 1 durch die Hebeeinrichtung 2 zu ermöglichen, kann die Breite der einzelnen Hebearme 7, 8 das geringste Spaltmaß zwischen zwei Transportbehältern 1 in nebeneinanderliegenden Behälterstapeln 4 unterschreiten.

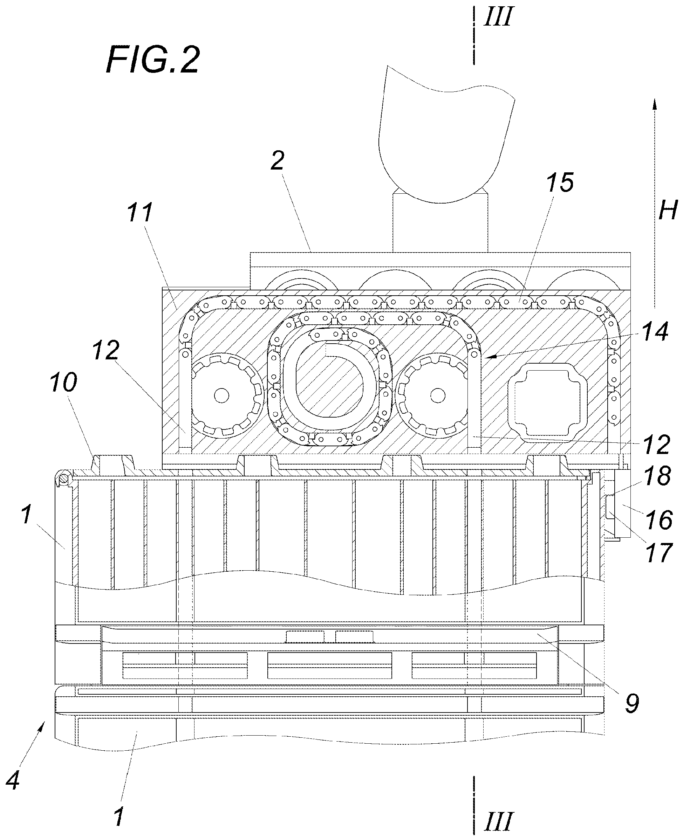

Mit Blick auf Fig. 2, 3 und 4 ist zu erkennen, dass die aufeinandergestapelten Transportbehälter 1 im vorliegenden Fall Rasteinrichtungen 9 zur lösbaren Befestigung untereinander aufweisen. Die Rasteinrichtungen 9 weisen beispielsweise entlang einer Eingriffsrichtung verlagerbare Rasthaken zum Eingriff in Rastausnehmungen eines am selben Behälterstapel 4 darunterliegenden Transportbehälters 1 auf. Die Rastausnehmungen können wie im vorliegenden Fall beispielsweise durch Führungskörper 10 bereitgestellt werden, die jeweils an der Behälterdecke eines Transportbehälters 1 angeordnet sind. Um daher eine problemlose Aufnahme eines Transportbehälters 1 von einem Behälterstapel 4 zu ermöglichen, kann eine erfindungsgemäße Vorrichtung eine Betätigungseinrichtung 11 zum Lösen einer durch die Rasteinrichtung 9 gebildeten Rastverbindung aufweisen. Zur Kraftbeaufschlagung der Rasteinrichtung 9 umfasst die Betätigungseinrichtung 11 beispielsweise Betätigungsschieber 12, die an in Betätigungsrichtung geführten freien Enden 13, 14 eines Kettentriebes 15 angeordnet sind. Für eine kompakte Bauweise kann der Kettentrieb 15 in einem Hebearm 7, 8 untergebracht sein. Wie dies ebenfalls in Fig. 2 angedeutet wird, kann die Schiebeeinrichtung 3 wenigstens einen Schieber 16 aufweisen, der zur Ausbildung einer lösbar zug- und schubfesten Verbindung einen Rastkörper 17 zum Eingriff in eine Rastöffnung 18 des Transportbehälters 1 umfasst.

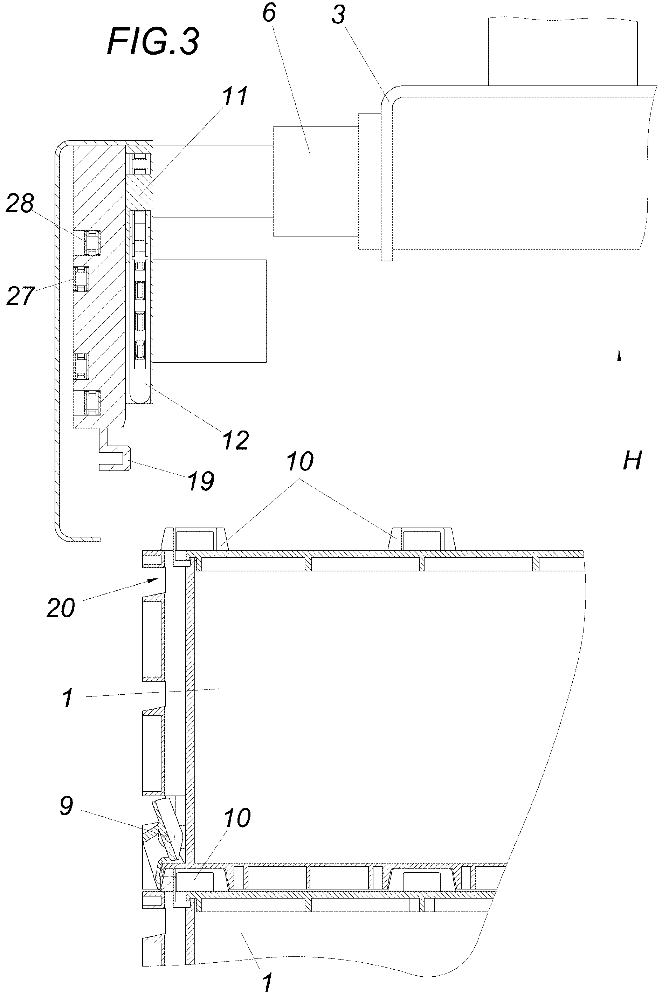

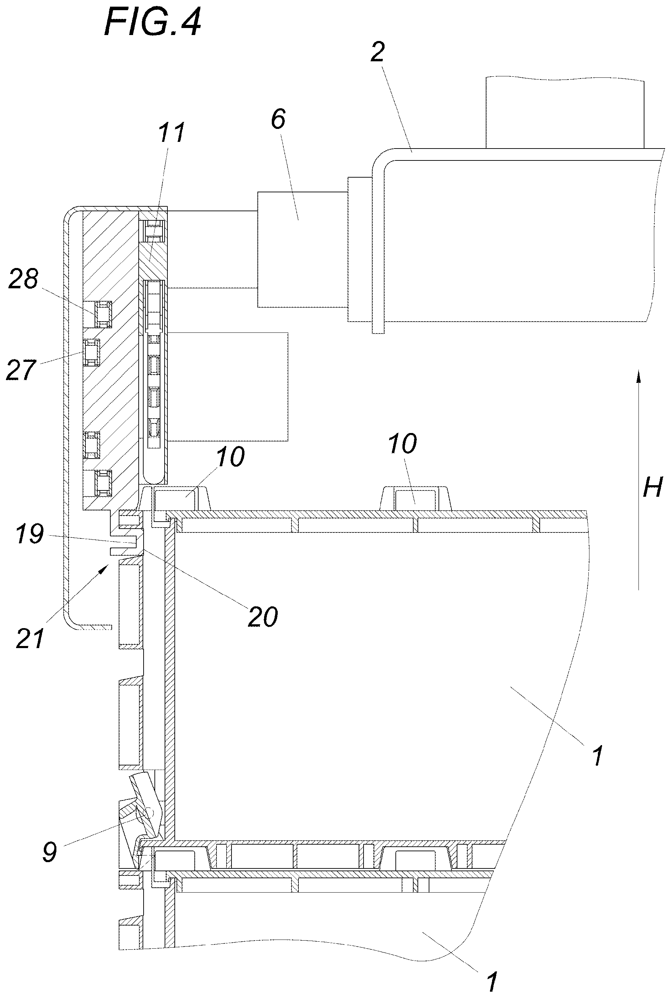

Mit Blick auf Fig. 3 und 4 weist die Hebeeinrichtung 2 eine Führung in Form von Führungsstegen 19 und Führungsnuten 20 zur Verlagerung des Transportbehälters 1 quer zur Heberichtung H auf. Demgegenüber weist der Transportbehälter 1 beispielsweise Führungsnuten 20 auf, sodass die gemäß Fig. 4 an den Transportbehälter 1 angestellte Hebeeinrichtung 2 eine quer zur Heberichtung H verlaufende Feder-Nut-Verbindung 21 mit dem Transportbehälter 1 ausbildet. Dadurch wird quer zur Heberichtung H die Verschiebbarkeit des Transportbehälters 1 relativ zur Hebeeinrichtung 2 durch ein Gleiten der Führungsstege 19 gegenüber den Führungsnuten 20 ermöglicht.

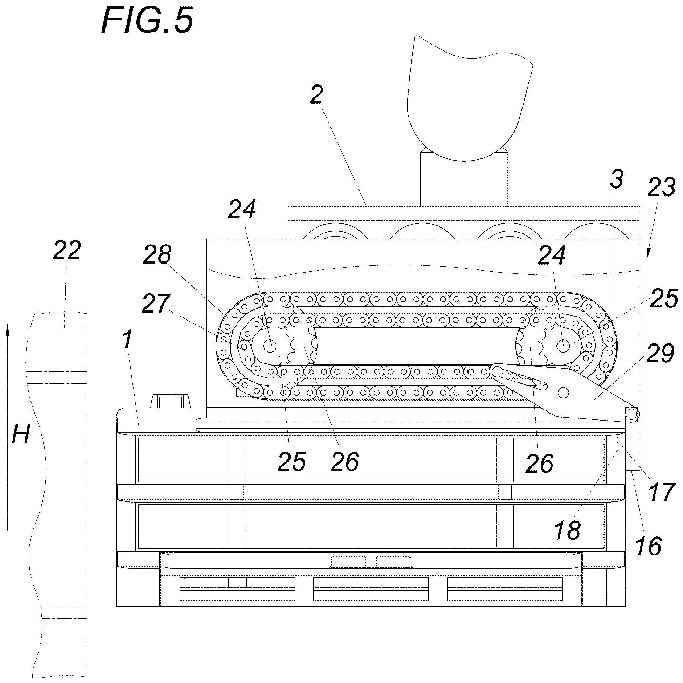

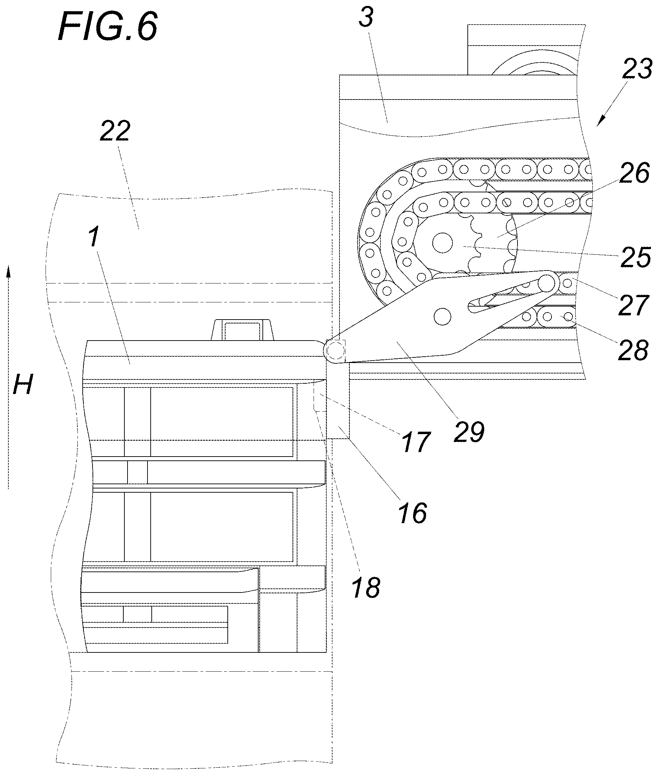

Fig. 5 zeigt einen von der Hebeeinrichtung 2 aufgenommenen und an der Einführseite eines Behälterregals 22 positionierten Transportbehälter 1 in Hebelage, der lösbar zug- und schubfest mit einer Schiebeeinrichtung 3 verbunden ist. Die Schiebeeinrichtung 3 umfasst zwei jeweils an einem Hebearm 7, 8 quer zur Heberichtung H verschiebbar gelagerte Schieber 16. Die Schieber 16 weisen jeweils einen Rastkörper 17 zum Eingriff in eine Rastöffnung 18 des Transportbehälters 1 auf. Darüber hinaus weist die Schiebeeinrichtung 3 einen Stelltrieb 23 auf, der in einem Hebearm 7, 8 untergebracht ist. Als Stelltrieb kann, wie dies in Fig. 5 und 6 angedeutet wird, ein durch ein Doppelritzelpaar 24 gebildeter Doppelkettentrieb vorgesehen sein. Ein Doppelritzel umfasst zwei Ritzel 25, 26 mit jeweils unterschiedlichen Durchmessern, sodass den Ritzeln 25 mit kleinerem Durchmesser und den Ritzeln 26 mit größerem Durchmesser jeweils eine Kette 27, 28 zugeordnet ist, sodass die Kette 27 klarerweise eine geringere Laufgeschwindigkeit als die Kette 28 aufweist. Ein Hebelarm 29 ist sowohl an den Ketten 27, 28 als auch am Schieber 16 angelenkt. Dadurch kann über den Stelltrieb 23 eine Verlagerung des Schiebers 16 von einer Hebestellung gemäß Fig. 5 in eine Übergabestellung gemäß Fig. 6 erfolgen, sodass sich der Transportbehälter 1 wie in Fig. 6 ersichtlich in einer Regaleinführlage befindet. Darüber hinaus geht insbesondere aus Fig. 6 hervor, das die Führung für den Transportbehälter 1 gleichzeitig auch eine Führung für die Schieber 16 zu deren Verlagerung quer zur Heberichtung H bilden kann.

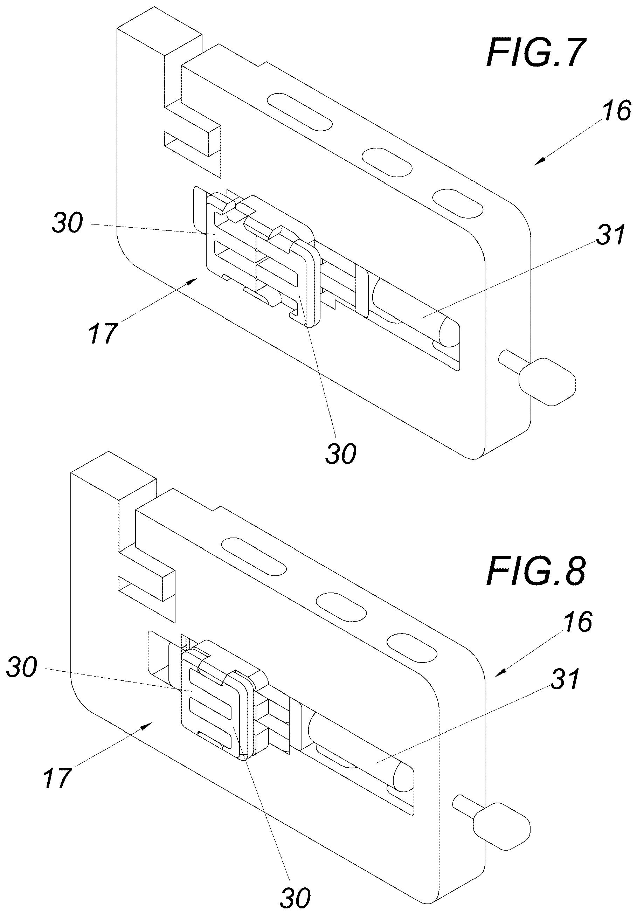

Fig. 7 und 8 zeigen jeweils eine Detailansicht eines Schiebers 16. Wird der Rastkörper 17 des Schiebers in eine Rastöffnung 18 des Transportbehälters 1 eingeführt, kann der Rastkörper 17 zur Ausbildung einer lösbar zug- und schubfesten Verbindung in eine Raststellung gemäß Fig. 7 verstellt werden. Dabei weist der Rastkörper 17 beispielsweise zwei Rastkörperhälften 30 auf, die quer zur Einführrichtung gegeneinander verlagert werden und die Rastöffnung 18 formschlüssig hintergreifen und / oder den Rastkörper 17 kraftschlüssig in der Rastöffnung 18 verspreizen. Die Stellbewegung wird dabei beispielsweise durch einen Hydraulikzylinder 31 eingeleitet. Fig. 8 zeigt wiederum die rückverlagerten Rastkörperhälften 30, sodass sich der Rastkörper 17 in einer Offenstellung befindet und aus der Rastöffnung 18 herausgeführt werden kann.

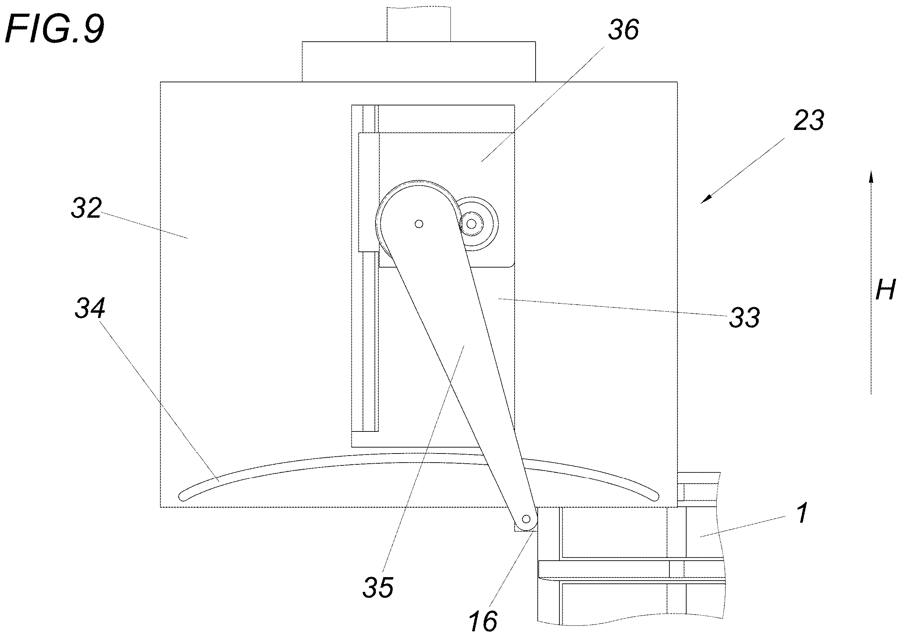

Schließlich zeigt Fig. 9 eine weitere Ausführungsform eines Stelltriebs 23. Der Stelltrieb 23 kann dabei eine Kulisse 32 umfassen, die eine vertikal verlaufende Kulissenführung 33 und eine horizontal verlaufende, bogenförmige Kulissenführung 34 aufweist. Der Schieber 16 ist über einen daran angelenkten Hebelarm 35 mit einer in der Kulisse 32 auf einer Vertikalführung gelagerten Antriebseinheit 36 für den Hebelarm 35 antriebsverbunden. Zusätzlich weist der Hebelarm 35 einen nicht näher dargestellten Führungszapfen auf, der in die bogenförmige Kulissenführung 34 eingreift. Wird nun der Hebelarm 35 über die Antriebseinheit 36 mit einer Drehbewegung beaufschlagt, wird einerseits die Antriebseinheit entlang der vertikalen Kulissenführung 33 und der den Führungszapfen aufweisende Abschnitt des Hebelarmes 35 entlang der bogenförmigen Kulissenführung 34 verlagert. Folglich wird auch der Schieber 16 quer zur Heberichtung H verlagert.

## Patentansprüche

1. Vorrichtung zum Verlagern von Transportbehältern (1) zwischen einem Behälterstapel (4) und einem Behälterregal (22), mit einer quer zu einer Heberichtung an (H) einen Transportbehälter (1) anstellbaren Hebeeinrichtung (2), wobei die Hebeeinrichtung (2) eine Führung zur Verlagerung des Transportbehälters (1) quer zur Heberichtung (H) aufweist und dass eine lösbar zug- und schubfest mit dem Transportbehälter (1) verbindbare Schiebeeinrichtung (3) zur Verlagerung des Transportbehälters (1) in der Führung (19) zwischen einer Hebelage und einer Regaleinführlage vorgesehen ist, **gekennzeichnet durch** eine Behälteraufnahme, in die der Transportbehälter (1) bei offener Hebeeinrichtung (2) in Heberichtung (H) und bei angestellter Hebeeinrichtung (2) quer zur Heberichtung (H) einführbar ist.

2. Vorrichtung nach Anspruch 1, **dadurch gekennzeichnet, dass** die an den Transportbehälter (1) angestellte Hebeeinrichtung (2) eine quer zur Heberichtung (H) verlaufende Feder-Nut-Verbindung (21) mit dem Transportbehälter (1) ausbildet.

3. Vorrichtung nach Anspruch 1 oder 2, **dadurch gekennzeichnet, dass** die Hebeeinrichtung (2) zwei relativ zueinander verlagerbare Hebearme (7, 8) aufweist.

4. Vorrichtung nach einem der Ansprüche 1 bis 3, **dadurch gekennzeichnet, dass** die Schiebeeinrichtung (3) wenigstens einen Schieber (16) aufweist, der einen zwischen einer Raststellung und einer Offenstellung verstellbaren Rastkörper (17) zum Eingriff in eine Rastöffnung (18) des Transportbehälters (1) aufweist.

5. Vorrichtung nach einem der Ansprüche 1 bis 4, **dadurch gekennzeichnet, dass** der Schieber (16) der Schiebeeinrichtung (3) zwischen einer Übergabestellung zur Verbindung mit einem in einem Behälterregal (22) angeordneten Transportbehälter (1) und einer Hebestellung zur Aufnahme des Transportbehälters (1) in der Hebeeinrichtung (2) verlagerbar ist.

6. Vorrichtung nach einem der Ansprüche 3 bis 5, **dadurch gekennzeichnet, dass** die Schiebeeinrichtung (3) zwei jeweils an einem Hebearm (7, 8) quer zur Heberichtung (H) verschiebbar gelagerte Schieber (16) umfasst.

7. Vorrichtung nach einem der Ansprüche 1 bis 6, **dadurch gekennzeichnet, dass** eine Betätigungseinrichtung (11) für eine Rastverbindung zur Verankerung des Transportbehälters (1) vorgesehen ist.

8. Vorrichtung nach Anspruch 7, **dadurch gekennzeichnet, dass** die Betätigungseinrichtung (11) einen Betätigungsschieber (12) umfasst, der am in Betätigungsrichtung geführten freien Ende (13, 14) eines Kettentriebes (15) angeordnet ist.

## Claims

1. Apparatus for moving transport containers (1) between a container stack (4) and a container rack (22), comprising a lifting device (2) which can set against a transport container (1) transversely with respect to a lifting direction (H), wherein the lifting device (2) comprises a guide for displacing the transport container (1) transversely with respect to the lifting direction (H), and wherein a sliding device (3) which can be connected to the transport container (1) in a detachable, tension-resistant and shear-resistant manner is provided for displacing the transport container (1) in the guide (19) between a lifting position and a rack insertion position, **characterized by** a container receptacle into which the transport container (1) can be inserted in the lifting direction (H) when the lifting device (2) is open, and transversely to the lifting direction (H) when the lifting device (2) is set.

2. Apparatus according to claim 1, **characterized in that** the lifting device (2) set against the transport container (1) forms a spring-groove connection (21) with the transport container (1) extending transversely to the lifting direction (H).

3. Apparatus according to claim 1 or 2, **characterized in that** the lifting device (2) has two lifting arms (7, 8) which can be displaced relative to one another.

4. Apparatus according to one of claims 1 to 3, **characterized in that** the sliding device (3) has at least one slider (16) which has a latching body (17), adjustable between a latching position and an open position, for engagement in a latching opening (18) of the transport container (1).

5. Apparatus according to one of claims 1 to 4, **characterized in that** the slider (16) of the sliding device (3) is displaceable between a transfer position for connection to a transport container (1) arranged in a container rack (22) and a lifting position for receiving the transport container (1) in the lifting device (2).

6. Apparatus according to one of claims 3 to 5, **characterized in that** the sliding device (3) comprises two sliders (16) each mounted on a lifting arm (7, 8) so as to be displaceable transversely to the lifting direction (H).

7. Apparatus according to one of claims 1 to 6, **characterized in that** an actuating device (11) is provided for a latching connection for anchoring the transport container (1).

8. Apparatus according to claim 7, **characterized in that** the actuating device (11) comprises an actuating slider (12) which is arranged at the free end (13, 14) of a chain drive (15) guided in the actuating direction.

## Revendications

1. Dispositif pour déplacer des conteneurs de transport (1) entre une pile de conteneurs (4) et un rayonnage à conteneurs (22), comprenant un dispositif de levage (2) pouvant être positionné transversalement par rapport à une direction de levage (H) devant un conteneur de transport (1), le dispositif de levage (2) comportant un guidage pour déplacer le conteneur de transport (1) transversalement par rapport à la direction de levage (H) et un dispositif de poussée (3) pouvant être relié de manière amovible et s'opposant à la traction et à la poussée au conteneur de transport (1) pour déplacer le conteneur de transport (1) dans le guidage (19) entre une position de levage et une position d'introduction dans le rayonnage, **caractérisé par** un logement de récipient dans lequel le conteneur de transport (1) peut être introduit dans la direction de levage (H) lorsque le dispositif de levage (2) est ouvert et transversalement à la direction de levage (H) lorsque le dispositif de levage (2) est engagé.

2. Dispositif selon la revendication 1, **caractérisé en ce que** le dispositif de levage (2) engagé sur le conteneur de transport (1) forme avec celui-ci une liaison à rainure et languette (21) s'étendant transversalement à la direction de levage (H).

3. Dispositif selon la revendication 1 ou 2, **caractérisé en ce que** le dispositif de levage (2) comporte deux bras de levage (7, 8) déplaçables l'un par rapport à l'autre.

4. Dispositif selon la revendication 1 ou 3, **caractérisé en ce que** le dispositif de poussée (3) comporte au moins un poussoir (16) qui comporte un élément d'encliquetage (17) réglable entre une position d'encliquetage et une position ouverte pour s'engager dans une ouverture d'encliquetage (18) du conteneur de transport (1).

5. Dispositif selon l'une des revendications 1 ou 4, **caractérisé en ce que** le coulisseau (16) du dispositif de poussée (3) est déplaçable entre une position de transfert pour la liaison avec un conteneur de transport (1) disposé dans un rayonnage de récipients (22) et une position de levage pour la réception du conteneur de transport (1) dans le dispositif de levage (2).

6. Dispositif selon l'une des revendications 3 ou 5, **caractérisé en ce que** le dispositif de poussée (3) comprend deux poussoirs (16) montés de manière coulissante sur un bras de levage (7, 8) transversalement à la direction de levage (H).

7. Dispositif selon l'une des revendications 1 à 6, **caractérisé en ce qu'**un dispositif d'actionnement (11) est prévu pour une liaison par encliquetage pour l'ancrage du conteneur de transport (1).

8. Dispositif selon la revendication 7, **caractérisé en ce que** le dispositif d'actionnement (11) comprend un coulisseau d'actionnement (12) qui est disposé à l'extrémité libre (13, 14) guidée dans la direction d'actionnement d'un entraînement à chaîne (15).
